# EUROPEAN PATENT SPECIFICATION

(11) **EP 2 602 841 B1**
(45) Date of publication and mention of the grant of the patent: **29.06.2016**
(21) Application number: 12181845.4
(22) Date of filing: 27.08.2012
(51) Int. Cl.: H01M 2/02, H01M 2/10

(54) **Battery**
Batterie
Batterie

(30) Priority: 09.12.2011 US 201161568865 P; 12.04.2012 US 201213445053
(43) Date of publication of application: 12.06.2013
(73) Proprietor: Samsung SDI Co., Ltd., Gyeonggi-do (KR); Robert Bosch GmbH, 70442 Stuttgart (DE)
(72) Inventor: Kim, Dukjung, Yongin-Si (KR); Kim, In, Yongin-Si (KR); Kim, Joongheon, Yongin-si (KR)
(74) Representative: Gulde & Partner

(56) References cited:
- EP-A1- 2 375 475
- JP-A- 2005 259 379
- JP-A- 2006 147 531
- US-A1- 2004 191 612
- US-A1- 2005 260 488
- US-A1- 2009 208 828
- US-A1- 2010 196 749

## Description

The invention relates to a battery, which can suppress deformation of an electrode assembly and a current collector. Batteries are disclosed in US 2009/208828 A1, US 2004/191612 A1, EP 2 375 475 A1, JP 2005, 259379 A, US 2010/196749 A1, US 2005260488 A1 and JP 2006 147531 A.

### Description of the Related Art

A rechargeable secondary battery can be repeatedly charged and discharged, unlike primary batteries, which are incapable of being recharged. A low capacity rechargeable battery composed of a single cell is generally used for a portable small electronic device, such as a mobile phone or a camcorder. A large capacity rechargeable battery composed of a plurality of cells connected in a form of a pack is widely used as power supply to drive motors of hybrid electric vehicles.

Secondary batteries may be classified into different types, for example, prismatic and cylindrical batteries. An electrode assembly is formed by disposing a separator as an insulator between positive and negative electrode plates and an electrolyte are injected into a can and installing a cap assembly having electrode terminals in the can.

As the capacity of the secondary battery gradually increases, various effects made to ensure user safety are required.

It is an object of the invention to provide a battery, in which deformation of an electrode assembly and a current collector can be suppressed.

According to the invention a battery according to claim 1 is provided. The battery comprises a can and an electrode assembly arranged inside the can. The battery further comprises at least one damping member and a current collector; wherein at least one electrode plate of the electrode assembly comprises a non-coating portion and the current collector is fixed to the non-coating portion. The damping member is positioned between two electrodes of the electrode assembly as well as between the electrode assembly and the can, and contacts the current collector.

Preferably, the battery is a secondary battery.

In a preferred embodiment, the damping member presses against the inner surface of the can.

The damping member prevents the electrode assembly from moving within the can and/ or prevents an external shock from being transmitted to the electrode assembly.

Preferably, the damping member presses against the non-coating portions.

The damping member may also press against the current collector.

Preferably the current collector comprises two coupling parts; both coupling parts are arranged between a pair of non-coating portions of electrode plates, wherein each one of the coupling parts is arranged between the damping member and a non-coating portion of an electrode plate, respectively.

The damping member may have a hole formed therein, thereby providing a passageway for gases.

In a preferred embodiment, the damping member has at least one curved surface convexly formed for contacting a non-coating portion, and/ or at least one curved surface convexly formed for contacting the inner surface of the can.

For realization of at least a partial form-fit seating of the coupling part, the damping member may comprise at least one recess.

Preferably, the damping member is made of an elastic material, for example a plastic material.

In accordance with an embodiment of the present invention, there is provided a battery including a can having an accommodating space and an open top portion; a plurality of electrode assemblies inserted into the can; a current collector connected to the non-coating portion of the electrode assembly; a damping member made of an elastic material between the electrode assembly and the can; and a cap plate sealing the can.

Here, one end of the damping member may come into contact with the non-coating portion and the other end of the damping member may come into contact with the inside of the can.

In addition, the damping member may be coupled between a pair of non-coating portions and may include a hole formed therein.

In addition, the damping member may be formed while pressing the current collector coupled to the non-coating portion on the non-coating portion.

### Effects of the Invention

As described above, since the battery according to the present invention includes an elastic damping member between an electrode assembly and a can, it is possible to prevent the electrode assembly from moving within the can while absorbing a shock to prevent the external shock from being transmitted to the electrode assembly.

In addition, in the battery according to the present invention, the damping member can prevent a current collector from moving while absorbing the shock by compressively pressing a coupling part of the current collector on the non-coating portion of the electrode assembly.

Further, since the battery according to the present invention includes the damping member having a hole formed therein, a passageway along which exhaust gases generated from the can may move is provided, thereby ensuring safety.

### Brief Description of the Drawings

FIG. 1 is a perspective view of a battery according to an embodiment of the present invention;
FIG. 2 is a cross-sectional view taken along the line A-A' of FIG. 1;
FIG. 3 is a cross-sectional view taken along the line B-B' of FIG. 1;
FIG. 4 is a top view illustrating a state in which a damping member is coupled between an electrode assembly and a can according to the present invention;
FIG. 5 is a bottom view illustrating a state in which a damping member is coupled between an electrode assembly and a can according to the present invention; and
FIG. 6 is a view illustrating a state in which a damping member is separated from an electrode assembly according to the present invention.

### Detailed Description

Example embodiments of the present invention will now be described in more detail with reference to accompanying drawings, such that those skilled in the art can easily practice the present invention.

Hereinafter, a configuration of a secondary battery according to an embodiment of the present invention will be described.

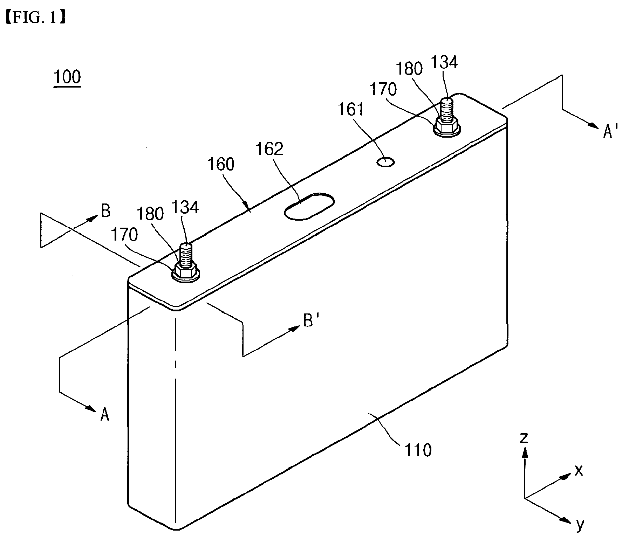

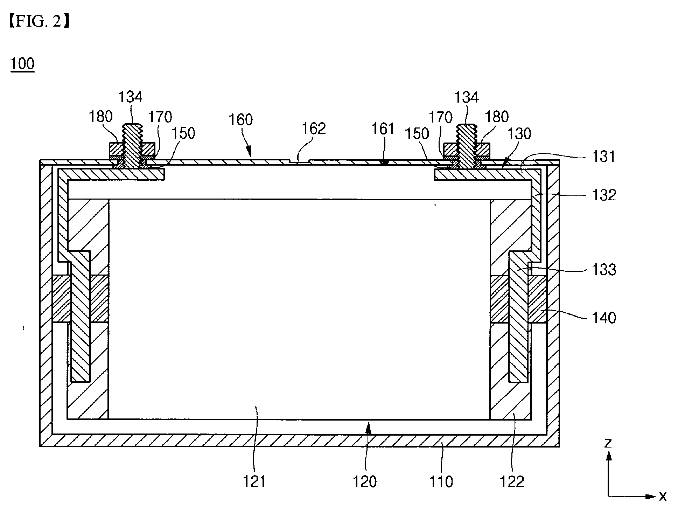

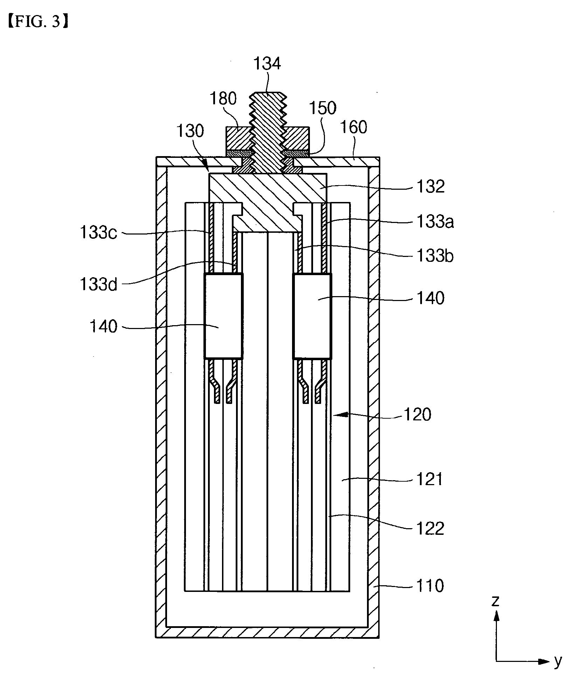

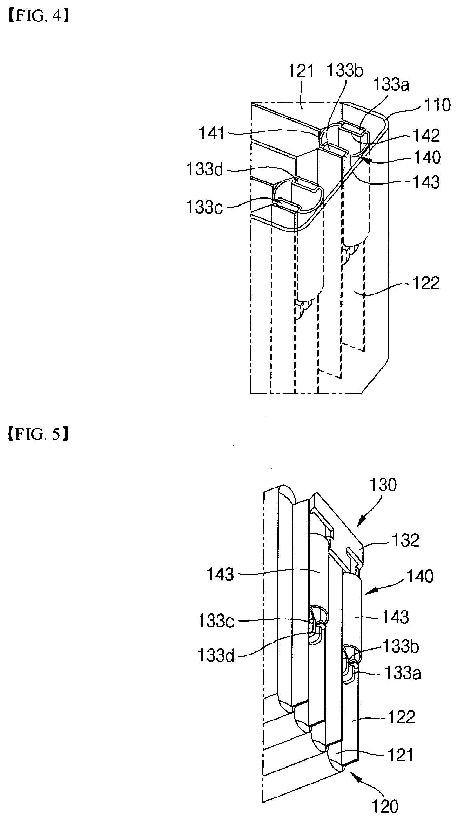

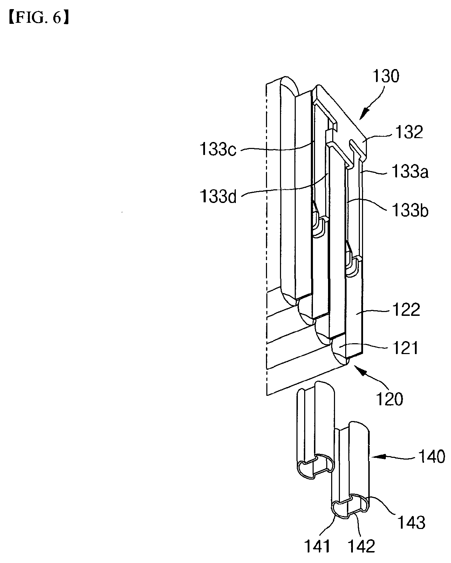

FIG. 1 is a perspective view of a secondary battery according to an embodiment of the present invention, FIG. 2 is a cross-sectional view taken along the line A-A' of FIG. 1, FIG. 3 is a cross-sectional view taken along the line B-B' of FIG. 1, FIG. 4 is a top view illustrating a state in which a damping member is coupled between an electrode assembly and a can according to the present invention, FIG. 5 is a bottom view illustrating a state in which a damping member is coupled between an electrode assembly and a can according to the present invention, and FIG. 6 is a view illustrating a state in which a damping member is separated from an electrode assembly according to the present invention.

Referring to FIGS. 1 to 6, the secondary battery 100 includes a can 110, an electrode assembly 120 inserted into the can 110, a current collector 130 connected to the electrode assembly 120, a damping member 140 coupled to the electrode assembly 120, a first insulating member 150 formed on the current collector 130, a cap plate 160 sealing the can 110, a second insulating member 170 formed on the cap plate 160, and a nut 180 formed on the second insulating member 170.

The can 110 has an internal accommodating space and has a substantially hexahedral shape having a top opening. The electrode assembly 120 and electrolyte are accommodated in the internal accommodating space of the can 110. The can 110 is formed of a conductive material such as aluminum, an aluminum alloy or nickel plated steel. Since FIG. 1 illustrates a state in which the can 140 and the cap plate 160 are coupled to each other, an opening is not shown in FIG. 1. However, the opening corresponds to a substantially opened portion of the peripheral portion of the cap plate 160. In addition, the inner surface of the can 110 is insulated, so that the can 110 is insulated from the electrode assembly 120, the current collector 130 and the cap plate 160.

In addition, the damping member 140 is formed between the can 110 and the electrode assembly 120. In addition, the damping member 140 is coupled to the current collector 130 while pressing the current collector 130 coupled to the electrode assembly 120. Therefore, the can 110 fixes the electrode assembly 120 and the current collector 130 by the damping member 140 so as to prevent the electrode assembly 120 and the current collector 130 from moving within the can 10.

The electrode assembly 120 may be fabricated by winding or stacking a stacked structure having the first electrode plate, the second electrode plate and the separator positioned therebetween, which are formed of thin plates or layers. Here, the first electrode plate may function as, for example, a negative electrode and the second electrode plate may function as, for example, a positive electrode, and vice versa. The first electrode plate may be formed by coating an active material such as graphite or carbon on an electrode current collector made of a metal foil such as copper or nickel, and may have a non-coating portion that is not coated with the active material. The second electrode plate may be formed by coating an active material such as a transition metal oxide on an electrode current collector made of a metal foil such as aluminum, and may have a non-coating portion that is not coated with the active material. The separator, which is positioned between the first electrode plate and the second electrode plate, prevents a short circuit and allows lithium ions to move between the first electrode plate and the second electrode plate. In addition, the separator may be made of polyethylene (PE), polypropylene (PP), or a composite film of PE and PP. However, the materials of the electrode plates and the separator are not limited to those described herein.

The electrode assembly 120 includes a plurality of electrode assemblies and is substantially accommodated in the can 110 together with electrolyte. While four electrode assemblies 120 are shown in the illustrated embodiment, the number of electrode assemblies 120 is not limited thereto. The electrolyte may include an organic solvent such as EC (ethylene carbonate), PC (propylene carbonate), DEC (diethyl carbonate), EMC (ethyl methyl carbonate) or DMC (dimethyl carbonate) and a lithium salt such as LiPF₆ or LiBF₄. In addition, the electrolyte may be in a liquid, solid or gel phase.

The electrode assembly 120 is formed by winding the electrode plates, each including a coating portion 121 coated with an active material and a non-coating portion 122 without the active material coated thereon. In addition, the non-coating portions 122 are positioned at opposite edges of the coating portion 121. The non-coating portions 122 correspond to a first electrode and a second electrode, respectively. If the electrode assembly 120 includes a plurality of electrode assemblies, the electrode assemblies 120 are arranged such that the non-coating portions 122 of the same electrode are positioned in the same direction. In addition, electrodes of the secondary battery are fabricated by a pair of current collectors 130 connected to the non-coating portions 122.

Here, the non-coating portions 122 are coupled to the current collectors 130 by welding. In a state in which the electrode assemblies 120 are arranged and a plurality of non-coating portions 122 are provided, the current collectors 130 are positioned parallel with the non-coating portions 122 in a vertical direction (in the z-axis direction of the drawing) to then be welded with the non-coating portions 122. Therefore, the non-coating portions 122 formed in the plurality of electrode assemblies 120 are be electrically connected to each other by the current collectors 130.

In addition, after the current collectors 130 are coupled to the non-coating portions 122, the non-coating portions 122 are coupled to the damping member 140. The damping member 140 is coupled between the non-coating portions 122. One end of the damping member 122 comes into contact with the non-coating portions 122 and the other end of the damping member 122 comes into contact with the can 110. Therefore, positions of the non-coating portions 122 may be fixed within the can 110 by the damping member 140. In addition, since the damping member 140 compressively presses the current collectors 130 on the non-coating portions 122, positions of the current collectors 130 may also be fixed by the damping member 140.

A pair of current collectors 130 may be provided to then be connected to the non-coating portions 122 each having a polarity. The current collectors 130 are connected to the electrode assemblies 120 through the non-coating portions 122 and then are exposed to the outside of the cap plate 160, forming input/output paths of electrical signals.

The current collector 130 includes a body part 131 formed parallel with the electrode assembly 110 in a horizontal direction (in the x-axis direction of FIG. 1), a bent part 132 bent from the body part 131 and formed substantially perpendicular to the electrode assembly 110 in a vertical direction (in the z-axis direction of FIG. 1), a coupling part 133 extending from the bent part 132 and coupled to the non-coating portion 122, and a terminal part 134 protruding from the body part 131 in the vertical direction (in the z-axis direction of FIG. 1) and exposed to the outside of the cap plate 160.

The body part 131 is shaped of a substantially planar plate and is formed horizontally on the electrode assembly 110 along the length of the electrode assembly 110. The body part 131 has a width enough to cover the arranged non-coating portions 122.

The bent part 132 is bent from the body part 131 in the vertical direction and extends parallel to the non-coating portions 122. The bent part 132 has a width enough to cover the non-coating portions 122.

The coupling part 133 includes a plurality of coupling parts 133a, 133b, 133c and 133d and extends from the bent part 132 in the vertical direction. As many coupling parts 133 as the non-coating portions 122 are provided and each of the coupling parts 133 extend in parallel while contacting the non-coating portions 122. That is to say, the coupling part 133 extends parallel with the non-coating portion 122 while a side surface of the coupling part 133 comes in contact with a side surface of the non-coating portion 122. The coupling part 133 includes two pairs of coupling parts 133a and 133b, and 133c and 133d, and one pair of coupling parts (for example, 133a and 133b) is positioned inside a pair of non-coating portions 122. That is to say, the pair of coupling parts 133a and 133b may be positioned to come into contact with opposing inner surfaces of the pair of non-coating portions 122. In such a state, the pair of coupling parts 133a and 133b are coupled to the non-coating portions 122 by welding. In addition, after the pair of coupling parts 133a and 133b are coupled to the non-coating portions 122, they are compressed by the damping member 140. The damping member 140 presses the pair of coupling parts 133a and 133b toward the non-coating portions 122, thereby allowing the pair of coupling parts 133a and 133b to be maintained at states of being stably coupled to the non-coating portions 122.

The terminal part 134 protrudes from the body part 131 in the vertical direction (in the z-axis direction of FIG. 1). The terminal part 134 further protrudes upwardly with respect to the cap plate 160, forming an electrode terminal. In addition, a screw thread may be provided on the outer circumferential surface of the terminal part 134 and may be coupled to a nut 180 engaged from the top. The terminal part 134 may be integrally formed with the body part 131. Alternatively, the terminal part 134 may be coupled to the body part 131 by means of a separate structure.

The damping member 140 has a hollow elongated body in the vertical direction (in the z-axis direction of FIG. 1) corresponding to a lengthwise direction of the non-coating portion 122. In addition, the damping member 140 is configured to have curved surfaces that are convexly formed toward the non-coating portions 122 and inner walls of the can 110 about a central region of the damping member 140. The damping member 140 is coupled between the plurality of non-coating portions 122. The damping member 140 is made of an elastic plastic material. After the coupling part 133 of the current collector 130 is coupled to the non-coating portion 122, the damping member 140 is coupled to the current collector 130 within the coupling part 133 of the current collector 130. That is to say, the damping member 140 is coupled to the current collector 130 while pressing the pairs of coupling parts 133a and 133b, and 133c and 133d within the pairs of non-coating portions 122. The damping member 140 is made of an elastic material, one region of the damping member 140 comes into contact with the non-coating portion 122 and another region of the damping member 140 comes into contact with the inner walls of the can 110. Therefore, the damping member 140 fixes the non-coating portions 122 within the can 110 and prevents the electrode assembly 120 and the current collector 130 from moving within the can 110. In addition, the damping member 140 prevents the electrode assembly 120 and the current collector 130 from being subjected to external shocks and being deformed.

In addition, the damping member 140 has a hole formed therein, thereby providing for a passageway of exhaust gases generated from the electrode assembly 120 in the can 110. Therefore, even if the damping member 140 is provided, movement of the exhaust gases may not be restrained. In addition, the damping member 140 may have increased elasticity due to the hole, thereby efficiently absorbing the shock transmitted to the electrode assembly 120 and the current collector 130.

In more detail, the damping member 140 includes a first region 141 coupled to the non-coating portion 122, a second region 142 pressing the current collector 130 and a third region 143 contacting the inner walls of the can 110.

The first region 141 has curved surfaces that are convexly formed toward the non-coating portion 122 and is disposed between a pair of non-coating portions 122 while contacting the pair of non-coating portions 122. Therefore, since the non-coating portions 122 come into contact with the curved surfaces, they are not damaged by the damping member 140. In addition, the first region 141 is elongated along the vertical length direction of the non-coating portion 122 (in the z-axis direction of FIG. 1) while making surface contact with the non-coating portion 122. The first region 141 can efficiently prevent movement of the non-coating portion 122, caused by movement of the electrode assembly 120, using elasticity. In addition, the first region 141 absorbs a shock to prevent an external shock from being transmitted to the non-coating portion 122.

The second region 142 is integrally connected to the first region 141 and has a width smaller than the first region 141. The second region 142 comes into contact with the coupling part 133 of the current collector 130. The second region 142 presses the coupling part 133 using elasticity, thereby allowing the coupling part 133 to be stably coupled to the non-coating portion 122 without being separated from the non-coating portion 122. In addition, the second region 142 may prevent the coupling part 133 of the current collector 130 from moving within the can 110, and may prevent the external shock from being transmitted to the coupling part 133.

The third region 143 is integrally connected to the second region 142 and is symmetrical to the first region 141 with respect to the second region 142. The third region 143 has a curved surface that is convexly formed toward the can 110. After the damping member 140 is coupled to the non-coating portion 122 and the coupling part 133, the third region 143 comes into contact with the inner surface of the can 110. The third region 143 may prevent movement of the can 110 and the non-coating portion 122 and may absorb the shock applied between the can 110 and the non-coating portion 122. Therefore, the third region 14e allows the electrode assembly 120 and the current collector 130 to be stably fixed within the can 110.

The first insulating member 150 is formed on the body part 131 of the current collector 130. The first insulating member 150 is formed between the current collector 130 and the cap plate 160. The first insulating member 150 electrically insulates the current collector 130 and the cap plate 160. However, the first insulating member 150 has a terminal hole formed therein to allow the terminal part 134 of the current collector 130 to penetrate the first insulating member 150 to then be exposed to an upper portion of the cap plate 160.

The cap plate 160 is formed on the can 110 to then be coupled to the can 110. The cap plate 160 seals the can 110 to prevent leakage of an electrolyte accommodated in the can 110. The cap plate 160 has a terminal hole formed therein to allow the terminal part 134 of the current collector 130 to penetrate the terminal hole to then be exposed to the upper portion of the cap plate 160. The cap plate 160 may have an injection hole formed at its one region to inject the electrolyte, and an injection plug 161 filling the injection hole after the electrolyte is injected. In addition, the cap plate 160 has a safety vent 162 formed roughly at its center. When internal gases are generated from the electrode assembly 120 in the can 110 due to, for example, over-charge, and the internal pressure of the can 110 exceeds a reference pressure, the safety vent 162 is opened earlier than the other part of the cap plate 160 to exhaust the generated gases, thereby reducing a risk of explosion due to an increase in the internal pressure.

The second insulating member 170 is formed on a top surface of the cap plate 160 along the periphery of terminal part 134 of the current collector 130. The second insulating member 170 electrically insulates the cap plate 160 and the terminal part 134. In addition, the second insulating member 171 allows the nut 180 engaged with the terminal part 134 from the top of the cap plate 160 to be electrically insulated from the cap plate 160.

The nut 180 is coupled to the terminal part 134 from the top of the terminal part 134. The nut 180 is engaged with a screw thread of the terminal part 134 through a screw thread formed therein. The nut 180 is engaged with the terminal part 134 to fix the terminal part 134 on the cap plate 160. Therefore, a position of the electrode assembly 120 coupled to the terminal part 134 is also fixed within the can 110. In addition, the position of the electrode assembly 120 is fixed on the cap plate 160 by the damping member 140 more stably, which is the same as described above.

As described above, since the secondary battery 100 according to the embodiment of the present invention includes the elastic damping member 140 between the electrode assembly 120 and the can 110, it is possible to prevent the electrode assembly 120 from moving within the can 110 and to prevent an external shock from being transmitted to the electrode assembly 120 by absorbing the external shock. In addition, the damping member 140 presses the current collector 130 such that the coupling part 134 of the current collector 130 is compressed on the non-coating portion 122 of the electrode assembly 120, thereby preventing movement of the current collector 130 and absorbing the shock. In addition, since the damping member 140 has a hole formed therein, a passageway along which the exhausted gases generated from the can 110 move can be provided, thereby ensuring the safety of the secondary battery 100.

### List of reference signs

- Secondary battery: 100
- Can: 110
- Electrode assembly: 120
- Non-coating portion: 122
- Current collector: 130
- Coupling part: 134
- Damping member: 140
- First region: 141
- Second region: 142
- Third region: 143
- First insulating member: 150
- Cap plate: 160
- Second insulating member: 170
- Nut: 180

## Claims

1. A battery (100), comprising a can (110) and an electrode assembly (120) arranged inside the can (110), the battery further comprising at least one damping member (140) and a current collector (130);
wherein at least one electrode plate of the electrode assembly (120) comprises a non-coating portion (122) and the current collector (130) is fixed to the non-coating portion (122), wherein the damping member (140) is positioned between two electrodes of the electrode assembly (120) **characterized in that** the damping member (140) contacts the current collector (130) and is positioned between the electrode assembly (120) and the can (110).

2. The battery as claimed in claim 1, wherein the damping member (140) presses against the inner surface of the can (110).

3. The battery as claimed in one of the preceding claims, wherein the damping member (140) is preventing the electrode assembly (120) from moving within the can (110) and/ or preventing an external shock from being transmitted to the electrode assembly (120).

4. The battery as claimed in one of the claims 1 to 3, wherein the damping member (140) presses against the non-coating portions (122).

5. The battery as claimed in one of the claims 1 to 4, wherein the damping member (140) presses against the current collector (130).

6. The battery as claimed in in one of the claims 1 to 5, wherein the current collector (130) comprises two coupling parts (134); both coupling parts (134) are arranged between a pair of non-coating portions (122) of electrode plates, wherein each one of the coupling parts (134) is arranged between the damping member (140) and a non-coating portion (122) of an electrode plate, respectively.

7. The battery as claimed in one of the preceding claims, wherein the damping member (140) has a hole formed therein, thereby providing a passageway for gases.

8. The battery as claimed in one of the preceding claims, wherein the damping member (140) has at least one curved surface convexly formed for contacting a non-coating portion (122), and/ or at least one curved surface convexly formed for contacting the inner surface of the can (110).

9. The battery as claimed in one of the preceding claims, wherein the damping member (140) comprises at least one recess for realization of at least a partial form-fit seating of the coupling part (134).

10. The battery as claimed in one of the preceding claims, wherein the damping member (140) is made of an elastic material.

11. The battery as claimed in one of the preceding claims, wherein the damping member (140) is made of a plastic material.

## Patentansprüche

1. Eine Batterie (100), aufweisend eine Dose (110) und eine Elektrodenanordnung (120), die in der Dose (110) angeordnet ist, wobei die Batterie ferner zumindest ein Dämpfungselement (140) und einen Stromkollektor (130) aufweist;
wobei zumindest eine Elektrodenplatte der Elektrodenanordnung (120) einen Nicht-Beschichtungsabschnitt (122) aufweist und der Stromkollektor (130) am Nicht-Beschichtungsabschnitt (122) befestigt ist, wobei das Dämpfungselement (140) zwischen zwei Elektroden der Elektrodenanordnung (120) positioniert ist, **dadurch gekennzeichnet, dass** das Dämpfungselement (140) den Stromkollektor (130) kontaktiert und zwischen der Elektrodenanordnung (120) und der Dose (110) positioniert ist.

2. Die Batterie wie in Anspruch 1 beansprucht, wobei das Dämpfungselement (140) gegen die Innenfläche der Dose (110) drückt.

3. Die Batterie wie in einem der vorhergehenden Ansprüche beansprucht, wobei das Dämpfungselement (140) verhindert, dass sich die Elektrodenanordnung (120) innerhalb der Dose (110) bewegt, und/oder verhindert, dass eine externe Erschütterung zur Elektrodenanordnung (120) übertragen wird.

4. Die Batterie wie in einem der Ansprüche 1 bis 3 beansprucht, wobei das Dämpfungselement (140) gegen die Nicht-Beschichtungsabschnitte (122) drückt.

5. Die Batterie wie in einem der Ansprüche 1 bis 4 beansprucht, wobei das Dämpfungselement (140) gegen den Stromkollektor (130) drückt.

6. Die Batterie wie in einem der Ansprüche 1 bis 5 beansprucht, wobei der Stromkollektor (130) zwei Kopplungsteile (134) aufweist; wobei die zwei Kopplungsteile (134) zwischen einem Paar von Nicht-Beschichtungsabschnitten (122) von Elektrodenplatten angeordnet sind, wobei jedes der Kopplungsteile (134) jeweils zwischen dem Dämpfungselement (140) und einem Nicht-Beschichtungsabschnitt (122) angeordnet ist.

7. Die Batterie wie in einem der vorhergehenden Ansprüche beansprucht, wobei das Dämpfungselement (140) ein darin ausgebildetes Loch aufweist, wodurch ein Durchgang für Gase bereitgestellt wird.

8. Die Batterie wie in einem der vorhergehenden Ansprüche beansprucht, wobei das Dämpfungselement (140) zumindest eine gekrümmte Oberfläche, die konvex ausgebildet ist, um einen Nicht-Beschichtungsabschnitt (122) zu kontaktieren, und/oder zumindest eine gekrümmte Oberfläche, die konvex ausgebildet ist, um die Innenfläche der Dose (110) zu kontaktieren, aufweist.

9. Die Batterie wie in einem der vorhergehenden Ansprüche beansprucht, wobei das Dämpfungselement (140) zumindest eine Ausnehmung, um zumindest ein partielles formschlüssiges Aufnehmen des Kopplungsteils (134) zu realisieren, aufweist.

10. Die Batterie wie in einem der vorhergehenden Ansprüche beansprucht, wobei das Dämpfungselement (140) aus einem elastischen Material gefertigt ist.

11. Die Batterie wie in einem der vorhergehenden Ansprüche beansprucht, wobei das Dämpfungselement (140) aus einem Kunststoffmaterial gefertigt ist.

## Revendications

1. Batterie (100) comprenant un boîtier (110) et un ensemble d'électrodes (120) agencé à l'intérieur du boîtier (110), la batterie comprenant en outre au moins un élément d'amortissement (140) et un collecteur de courant (130) ;
dans laquelle au moins une plaque d'électrode de l'ensemble d'électrodes (120) comprend une partie sans revêtement (122) et un collecteur de courant (130) est fixé sur la partie sans revêtement (122), dans laquelle l'élément d'amortissement (140) est positionné entre deux électrodes de l'ensemble d'électrodes (120), **caractérisée en ce que** l'élément d'amortissement (140) est en contact avec le collecteur de courant (130) et est positionné entre l'ensemble d'électrodes (120) et le boîtier (110).

2. Batterie selon la revendication 1, dans laquelle l'élément d'amortissement (140) appuie contre la surface interne du boîtier (110).

3. Batterie selon l'une des revendications précédentes, dans laquelle l'élément d'amortissement (140) empêche l'ensemble d'électrodes (120) de se déplacer à l'intérieur du boîtier (110) et/ou empêche la transmission d'un choc externe à l'ensemble d'électrodes (120).

4. Batterie selon l'une des revendications 1 à 3, dans laquelle l'élément d'amortissement (140) appuie contre les parties sans revêtement (122).

5. Batterie selon l'une des revendications 1 à 4, dans laquelle l'élément d'amortissement (140) appuie contre le collecteur de courant (130).

6. Batterie selon l'une des revendications 1 à 5, dans laquelle le collecteur de courant (130) comprend deux parties de couplage (134) ; les deux parties de couplage (134) sont agencées entre une paire de parties sans revêtement (122) des plaques d'électrode, dans laquelle chacune des parties de couplage (134) est agencée entre l'élément d'amortissement (140) et une partie sans revêtement (122) d'une plaque d'électrode, respectivement.

7. Batterie selon l'une des revendications précédentes, dans laquelle l'élément d'amortissement (140) a un trou formé à l'intérieur de ce dernier, fournissant ainsi une voie de passage pour les gaz.

8. Batterie selon l'une des revendications précédentes, dans laquelle l'élément d'amortissement (140) a au moins une surface incurvée, formée de manière convexe pour être en contact avec une partie sans revêtement (122), et/ou au moins une surface incurvée, formée de manière convexe pour être en contact avec la surface interne du boîtier (110).

9. Batterie selon l'une des revendications précédentes, dans laquelle l'élément d'amortissement (140) comprend au moins un évidement pour la réalisation d'au moins un siège mécanique partiel de la partie de couplage (134).

10. Batterie selon l'une des revendications précédentes, dans laquelle l'élément d'amortissement (140) est réalisé avec une matière élastique.

11. Batterie selon l'une des revendications précédentes, dans laquelle l'élément d'amortissement (140) est réalisé à partir d'une matière plastique.
